# EUROPÄISCHE PATENTSCHRIFT

(11) **EP 3 028 562 B1**
(45) Veröffentlichungstag und Bekanntmachung des Hinweises auf die Patenterteilung: **18.10.2017**
(21) Anmeldenummer: 15194880.9
(22) Anmeldetag: 17.11.2015
(51) Int. Cl.: A01F 15/14

(54) **QUADERBALLENPRESSE**
SQUARE BALER
PRESSE À BALLES PARALLELEPIPEDIQUES

(30) Priorität: 03.12.2014 DE 102014017782
(43) Veröffentlichungstag der Anmeldung: 08.06.2016
(73) Patentinhaber: Usines Claas France S.A.S, 57140 St. Rémy / Woippy (FR)
(72) Erfinder: Altmayer, Marc, 57320 Alging (FR); Arnould, Cyrille, 57645 Montoy-Flanville (FR)
(74) Vertreter: Budach, Steffen

(56) Entgegenhaltungen:
- EP-A1- 2 671 444
- DE-A1- 19 528 658
- US-A1- 2014 202 346

## Beschreibung

Die vorliegende Erfindung betrifft eine Quaderballenpresse zum Formen von Ballen aus landwirtschaftlichem Erntegut. Eine solche Quaderballenpresse umfasst herkömmlicherweise einen Presskolben, der in einem Presskanal hin und her beweglich ist, um in den Presskanal eingeführtes Erntegut darin zu verdichten, sowie einen Knoter zum Verknoten eines Bindegarnstrangs, durch den ein in dem Presskanal fertig geformter Ballen zusammengehalten wird. Die Wand des Presskanals weist Schlitze auf, durch die das Bindegarn hindurchgeführt ist. Durch diese Schlitze können kleine Bruchstücke des Ernteguts während des Verdichtungsvorgangs entweichen und sich außerhalb des Presskanals, insbesondere am Knoter, absetzen und dessen Funktionsfähigkeit beeinträchtigen.

Die US 2014/202346 A1 offenbart eine Ballenpresse zum Bündeln von faserigem Material, die ein Reinigungssystem zum Entfernen von Schmutz aus der Ballenpresse an einer Vielzahl von Stellen umfasst. Das Reinigungssystem umfasst ein Luftgebläse, ein Leitungssystem mit einem Einlass und einer Vielzahl von Auslässen zum Zuführen von Luft von dem Gebläse zu der Vielzahl von Stellen, sowie einen Luftstromsteuermechanismus zum Steuern der Zuführung von Luft von dem Einlass zu der Vielzahl von Auslässen, wobei der Luftstromsteuermechanismus konfiguriert ist, um die Luft durch das Leitungssystem abwechselnd zu einem oder mehreren der Auslässe zuzuführen.

unterbrochen werden muss, um den Knoter zu reinigen. Dies beeinträchtigt die Produktivität der Ballenpresse. Deshalb ist es wünschenswert, die Zeitintervalle zwischen zwei Säuberungen des Knoters möglichst lang machen zu können. Dies gelingt zwar in gewissem Umfang durch eine Steigerung der Strömungsgeschwindigkeit, doch das dafür benötigte leistungsstarke Gebläse ist teuer und benötigt viel Antriebsenergie, was wiederum die Wirtschaftlichkeit beeinträchtigt.

Aufgabe der vorliegenden Erfindung ist daher, eine Quaderballenpresse anzugeben, bei der auch bei niedriger Leistung eines Gebläses lange Zeitintervalle zwischen zwei Säuberungen der Knoter erreichbar sind.

Die Aufgabe wird gelöst, indem bei einer Quaderballenpresse mit einem Presskanal, einem an den Presskanal angeordneten ersten Knoter, einem Gebläse und einem Strömungsleitelement das Strömungsleitelement zwischen einer ersten Stellung, in der es einen Blasluftstrom des Gebläses auf den ersten Knoter lenkt, und wenigstens einer zweiten Stellung beweglich ist, in der es den Blasluftstrom an dem ersten Knoter vorbei auf einen zweiten Knoter lenkt. Partikel die sich im Knoter abgesetzt haben, sind somit abwechselnd der Zugkraft des Blasluftstroms bzw. stillstehender Luft ausgesetzt. Dieser Wechsel fördert Bewegungen der Partikel, die es hängengebliebenen Partikeln erleichtern, sich wieder vom Knoter zu lösen. So gelingt es auch mit geringer Gebläseleistung, das Wachstum einer Partikelschicht am Knoter wirksam zu verzögern.

In der zweiten Stellung lenkt das Strömungsleitelement den Blasluftstrom zweckmäßigerweise auf einen zweiten Knoter Zusätzlich können weitere Knoter so angeordnet sein, dass sie in einer Zwischenstellung zwischen der ersten und der zweiten Stellung vom Blasluftstrom erfasst werden. So genügt ein einziges Gebläse, um die Ablagerung von Partikeln an mehreren Knotern zu verhindern bzw. zu verzögern.

Um eine Vielzahl von in einer Reihe angeordneten Knotern sauberzuhalten, kann die Ballenpresse wenigstens zwei Strömungsleitelemente aufweisen, wobei jedem Knoter genau eines der Strömungsleitelemente zum Lenken des Blasluftstroms auf den Knoter zugeordnet ist.

Die Menge an Erntegutpartikeln, die aus dem Presskanal entweichen, ist im Laufe eines Bewegungszyklus des Presskolbens veränderlich. Am stärksten ist der Austritt von Partikeln gegen Ende einer Pressbewegung. Wünschenswert wäre, diese Partikel wegblasen zu können, bevor sie Gelegenheit haben, sich an einer Oberfläche der Presse, insbesondere an einem Knoter, abzusetzen. Je länger die Zeitspanne zwischen dem Austritt der Partikel aus dem Presskanal und ihrer Erfassung durch den Blasluftstrom ist, umso mehr Partikel setzen zwischenzeitlich ab. Damit dies nicht zu einer vorzeitigen Verschmutzung eines einzelnen Knoters führt, dessentwegen der Betrieb der Quaderballenpresse unterbrochen werden müsste, auch wenn andere Knoter noch nicht so stark verschmutzt sind, sollten die Perioden des Strömungsleitelements und des Presskolbens in einem nicht ganzzahligen Verhältnis stehen. So ist sichergestellt, dass an jedem Knoter die Zeitspanne zwischen dem Maximum des Partikelaustritts und der Erfassung des Knoters durch den Blasluftstrom fluktuiert und im Mittel für alle Knoter gleich ist.

Insbesondere können die Bewegungen des Presskolbens und des Strömungsleitelements so miteinander synchronisiert sein, dass bei jeweils gleicher Stellung des Presskolbens in verschiedenen Perioden der Kolbenbewegung das Strömungsleitelement abwechselnd die erste und die zweite Stellung einnimmt. Diese Kolbenstellung kann diejenige sein, bei der die Austrittsrate der Partikel aus dem Presskanal maximal ist, oder unmittelbar auf dieses Maximum folgen. So kann sichergestellt werden, dass abwechselnd beim ersten Knoter und beim zweiten Knoter ein Großteil der aus dem Presskanal ausgetretenen Partikel weggeblasen wird, bevor er Zeit hat, sich an dem betreffenden Knoter abzusetzen.

Zweckmäßig ist ferner, die Perioden und die Phasenlage der Bewegungen von Presskolben und Strömungsleitelement so zu wählen, dass in jeder Periode der Presskolbenbewegung das Strömungsleitelement den Weg zwischen erster und zweiter Stellung wenigstens einmal zurücklegt, so dass erster und zweiter Knoter in jeder Periode der Presskolbenbewegung wenigstens einmal angeblasen werden.

Das Strömungsleitelement kann wenigstens eine schwenkbare Klappe umfassen; vorzugsweise sind mehrere gekoppelt in gleiche Richtung schwenkbare Klappen vorgesehen.

Die wenigstens eine Klappe kann am Ausgang eines Luftführungsrohrs angeordnet sein.

Die wenigstens eine Klappe ist von den Knotern durch einen von luftführenden Einbauten freien Zwischenraum getrennt. So kann der Blasluftstrom kontinuierlich zwischen erstem und zweitem Knoter hin und her schwenken und auch zwischen den Knotern Partikelablagerungen verhindern.

Die Schwenkgeschwindigkeit der Klappe kann in der ersten und zweiten Stellung niedriger sein als in einer Zwischenstellung, dadurch ist die Zeit, die erster und zweiter Knoter dem Blasluftstrom ausgesetzt sind, verlängert, was wiederum einer schnellen Verschmutzung des ersten und des zweiten Knoters entgegen wirkt.

Es kann ein dritter Knoter vorhanden sein, der in der Zwischenstellung dem Blasluftstrom ausgesetzt ist. Die Zeitspanne, in der dieser dem Blasluftstrom ausgesetzt ist, ist zwar kürzer als beim ersten und zweiten Knoter, im Gegensatz zu diesen wird der dritte Knoter jedoch in jeder Periode der Bewegung des Strömungsleitelements zweimal vom Blasluftstrom erfasst und auf diese Weise effizient sauber gehalten.

Eine solche geschwindigkeitsvariable Schwenkbewegung der Klappe kann auf einfache Weise durch einen Exzenter angetrieben sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Schnittdarstellung einer erfindungsgemäßen Ballenpresse;
- Fig. 2: eine perspektivische Ansicht einer auf dem Presskanal der Ballenpresse aus Fig. 1 angeordneten Knoterbaugruppe; und
- Fig. 3: eine schematische Draufsicht auf einen Teil der Knoterbaugruppe.

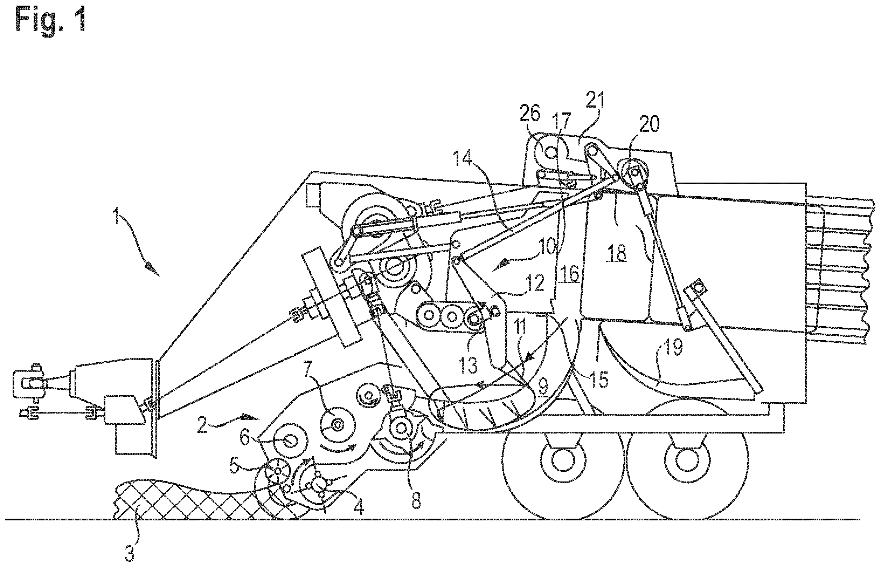

Die in Fig. 1 gezeigte Ballenpresse 1 ist als ein Anhänger zum Ankoppeln an ein nicht dargestelltes Zugfahrzeug ausgelegt, die Erfindung ist aber selbstverständlich auch auf eine selbstfahrende Ballenpresse anwendbar.

Eine Aufnahmevorrichtung 2 der Ballenpresse, auch als Pickup bezeichnet, dient zum Aufnehmen von Erntegut 3 vom Boden. Die Aufnahmevorrichtung 2 umfasst eine mit abstehenden Zinken besetzte Aufsammeltrommel 4, die in einer solchen Richtung drehangetrieben ist, dass sie das Erntegut 3 auf dem Boden vor sich herschiebt, es dabei anhebt und in einen durch Rollen 5, 6 eines Niederhalters begrenzten Spalt hineinzieht. Eine am Ende des Spalts angeordnete Schneckenwalze 7 ist mit zwei Schnecken von entgegengesetztem Drehsinn besetzt, die das Erntegut zur Mitte der Ballenpresse zusammenschieben und einem Schneidrotor 8 zuführen. Ortsfeste Messer greifen in Zwischenräume des Schneidrotors 8 ein, um das Erntegut zu zerkleinern. Das zerkleinerte Erntegut wird durch die Drehung des Schneidrotors 8 einem Sammelkanal 9 zugeführt.

Der Sammelkanal 9 ist nach oben durch eine konvex gekrümmte und mit Längsschlitzen versehene Decke begrenzt, durch die Zinken 11 eines Raffers 10 in den Kanal 9 eingreifen können. Die Zinken 11 sind an einem zweiarmigen Hebel 12 befestigt, von dem ein Angelpunkt, angetrieben und geführt durch einen Kurbelarm 13, mit einer ersten Frequenz um eine Drehachse des Kurbelarms 13 umläuft, während ein an einem von den Zinken 11 abgewandten Ende des Hebels 12 angreifender Lenker 14 mit einem ganzzahligen Bruchteil 1/n, zum Beispiel der Hälfte oder einem Drittel, der Frequenz des Arms 13 angetrieben ist. Das Zusammenwirken von Arm 13 und Lenker 14 führt dazu, dass die Zinken 11 periodisch auf (auf n verschiedenen Wegen) den Sammelkanal 9 durchlaufen und dabei von dem Schneidrotor 8 zugeführtes Erntegut gegen eine Flanke 15 eines in einem Presskanal 16 geführten Presskolbens 17 drücken und vorverdichten. Bei der n-ten Bewegung der Zinken 11 ist der Presskolben 17, wie in der Figur gezeigt, im Presskanal 16 nach vorn zurückgezogen, so dass die Zinken 11 das Erntegut in den Presskanal 16 hineinschieben.

Der Presskolben 17 ist mit der gleichen Frequenz wie der Lenker 14 oszillierend angetrieben, um das neu zugeführte Erntegut gegen einen in Entstehung befindlichen Ballen 18 zu pressen, so dass dieser mit jedem Hub des Presskolbens 17 ein Stück weit wächst und im Presskanal 16 nach hinten verschoben wird.

Oberhalb des Presskanals 16 ist eine Knoterbaugruppe 21 mit mehreren über die Breite des Presskanals 16 hinweg verteilten Knotern 20 angeordnet. Jeder dieser Knoter 20 fixiert das Ende eines Bindegarnstrangs, der sich jeweils durch einen Schlitz an der Oberseite des Presskanals 16, an der vom Kolben 17 abgewandten Rückseite des Ballens 18 vorbei und durch Schlitze in der Unterseite des Presskanals zu einer Bindenadel 19 erstreckt.

Wenn der Ballen 18 eine vorgesehene Größe erreicht hat, werden, während zwischen dem Presskolben 17 und dem Ballen 18 ein Zwischenraum offen ist, die Bindenadeln 19 durch diesen Zwischenraum hochgeschwenkt, um den von ihm geführten Bindegarnstrang jeweils einem der Knoter 20 zuzuführen und das Bindegarn rings um den fertigen Ballen 18 zu verknoten.

Durch die Pressbewegungen des Kolbens 17 wird auch Luft aus dem Presskanal 16 verdrängt, die durch die Schlitze an Ober- und Unterseite des Presskanals 16 entweicht und dabei Erntegutpartikel mitspült. Wenn sich diese Partikel in zu großer Menge an den Knotern 20 absetzen, ist deren Funktionsfähigkeit nicht mehr gewährleistet; insbesondere kann es vorkommen, dass das Bindegarn nicht mehr fest genug geklemmt ist und durch die Pressbewegung des Kolbens 17 aus dem Knoter 20 herausgerissen wird. Wenn dies geschieht, muss der Betrieb der Ballenpresse unterbrochen und der unfertige Ballen 18 aus dem Presskanal 16 entfernt werden, und das Bindegarn muss neu eingefädelt werden.

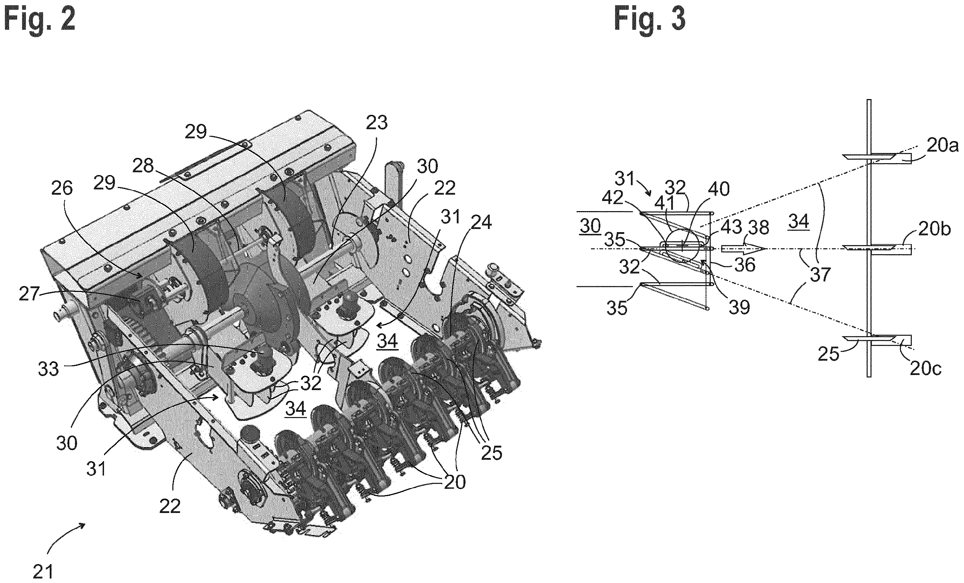

Fig. 2 zeigt die Knoterbaugruppe 21 in einer perspektivischen Ansicht schräg von oben. Zwischen zwei in Fahrtrichtung der Ballenpresse orientierten Seitenwänden 22 sind zwei über ein Getriebe gekoppelte Wellen 23, 24 drehbar gelagert. Die Welle 23 treibt die Bewegung des (in Fig. 2 nicht gezeigten) Lenkers 14 an, die andere Welle 24 trägt eine Mehrzahl von Kegelrädern 25, hier sechs Stück, die jeweils einen der Knoter 20 antreiben.

Ein Gebläse 26 in einem vorderen Bereich der Knoterbaugruppe 21 umfasst einen elektrischen oder hydraulischen Motor 27, der über eine gemeinsame Welle 28 Zentrifugalrotoren in zwei zylindrischen Gehäusen 29 antreibt. Von den Gehäusen 29 erstreckt sich jeweils ein Luftführungsrohr 30 nach hinten in Richtung der Knoter 20. Die Luftführungsrohre 30 laufen jeweils unterhalb der Welle 23 hindurch, so dass der von ihnen ausgestoßene Luftstrom dicht über der (in Fig. 2 nicht dargestellten) Oberseite des Presskanals 16 herstreicht und dort die Ablagerung von Partikeln verhindert.

An einer Austrittsöffnung jedes Blasluftkanals 30 ist als Strömungsleitelement 31 eine Anordnung von hier drei gekoppelten und gleichsinnig schwenkbaren Klappen 32 vorgesehen. In der Darstellung der Fig. 2 sind die Gruppen von Klappen 32 jeweils durch einen Elektromotor 33 schwenkangetrieben; sie könnten aber auch durch ein Getriebe an die Drehung der Welle 23 gekoppelt sein.

Die Klappen 32 sind von den Knotern 20 durch einen freien Zwischenraum 34 getrennt, dessen Breite entsprechend der Schwenkbewegungsfreiheit der Klappen 32 so gewählt ist, dass über jeden Blasluftkanal 30 abwechselnd drei Knoter 20 angeblasen werden können.

Fig. 3 zeigt eine schematische Draufsicht auf die Klappen 32 am Ende eines der beiden Blasluftkanäle 30 und drei diesen Klappen 32 gegenüberliegende Knoter, hier der besseren Unterscheidung wegen als Knoter 20a, 20b, 20c bezeichnet. Die Klappen 32 sind jeweils an ihrem dem Blasluftkanal 30 zugeordnetem Ende um eine vertikale Achse 35 schwenkbar gelagert und untereinander durch eine Stange 36 gekoppelt. In der mit durchgezogenen Linien dargestellten Stellung der Klappen 32 kreuzt eine Ebene 37, die mittig zwischen den Hauptseiten der mittleren Klappe 32 verläuft, den Knoter 20b, und der von dem Gebläse 26 ausgestoßene Blasluftstrom, dargestellt durch einen Pfeil 38, trifft auf den Knoter 20b, während die Strömungsgeschwindigkeit der Lüftung an den Knotern 20a, 20c gering ist.

Ein Exzenter 39 ist durch ein von dem Elektromotor 33 um eine Achse 40 drehangetriebenes Rad 41 und einen Stift 42 gebildet, der gegen die Achse 40 versetzt in eine Kulisse 43 an einer der Klappen 32 eingreift. Eine Drehung des Rades 41 um ca. 90° im Uhrzeigersinn versetzt die Klappen in die in Fig. 3 gestrichelt gezeichnete Stellung, in der die Ebene 37 den Knoter 20c kreuzt und der Blasluftstrom 38 in Richtung dieses Knoters ausgestoßen wird. Eine Drehung des Rades 41 um weitere 90° bringt die Klappen 32 in die mit durchgezogenen Linien gezeichnete Stellung zurück; nach weiteren 90° Drehungen nehmen sie eine in der Figur nicht eigens dargestellte, zur gestrichelt gezeichneten spiegelbildliche Stellung ein, in der die Ebene 37 durch den Knoter 20a verläuft.

So wird im Laufe jeder Umdrehung des Rades 41 der Knoter 20b zweimal, die Knoter 20a, 20c aber nur je einmal vom Blasluftstrom 38 erfasst. Die Reinigungseffizienz ist dennoch bei allen drei Knotern vergleichbar, da die Schwenkgeschwindigkeit der Klappen 32 bei Ausrichtung des Blasluftstroms 38 auf die Knoter 20a, 20c jeweils zeitweilig null wird und somit die Einwirkdauer des Blasluftstroms an den Knotern 20a, 20c länger ist als am Knoter 20b.

Während einer Vorwärtsbewegung des Presskolbens 17 wird Luft in den Presskanal 16 hinein gesaugt, und der Austritt von Erntegutpartikeln an den Schlitzen in den Wänden des Presskanals 16 ist vernachlässigbar. Bei einer Rückwärtsbewegung des Presskolbens 17 wird diese Luft wieder verdrängt und trägt dabei Erntegutpartikel durch die Schlitze nach außen. Um diesem Schwall von Partikeln keine Gelegenheit zu geben, sich an den Knotern 20a bis c abzusetzen, sollten die Klappen 32 während einer Bewegungsperiode des Kolbens ihren Schwenkwinkelbereich komplett durchlaufen, d.h. die Periode der Schwenkbewegung der Klappen 32 sollte maximal zweimal so lange wie die Periode der Kolbenbewegung sein. Vorzugsweise ist sie genauso lang wie die Periode der Kolbenbewegung oder noch kürzer, so dass der Schwenkwinkelbereich während einer Pressbewegung des Kolbens 17 komplett durchlaufen wird.

Die Phasen der Bewegungen von Klappen 32 und Presskolben 17 können so aufeinander abgestimmt werden, dass bei der Stellung des Presskolbens 17, bei der der Austritt von Partikeln aus dem Presskanal 16 sein Maximum erreicht, der Blasluftstrom 38 jeweils abwechselnd auf den Knoter 20a und den Knoter 20c gerichtet ist. Wenn die Periode der Klappenbewegung zweimal so lang wie die der Kolbenbewegung ist, ist dies in jeweils unmittelbar aufeinanderfolgenden Perioden der Kolbenbewegung der Fall. So sind beide Knoter gleich gut vor der Ablagerung von Partikeln geschützt, und auch der Knoter 20b wird wirksam sauber gehalten, da er in jeder Periode der Presskolbenbewegung einmal angeblasen wird.

Alternativ kommt in Betracht, die Periode der Plattenbewegung zu 4/3 oder 4/5 der Periode der Presskolbenbewegung anzusetzen, so dass der Exzenter 39 in jeder Periode der Presskolbenbewegung 3/4 oder 5/4 Umdrehungen vollführt. So ist sichergestellt, dass in jeder Periode der Kolbenbewegung alle Knoter wenigstens einmal angeblasen werden, und es ist möglich, die Bewegungen des Kolbens und der Klappen so zu synchronisieren, dass zum Zeitpunkt maximalen Partikelaustritts alle drei Knoter im Wechsel angeblasen werden.

Andere nicht ganzzahlige Verhältnisse zwischen den Perioden der Kolbenbewegungen und der Klappenbewegungen kommen ebenfalls in Betracht; wesentlich ist, dass die Zeitspanne zwischen dem Maximum des Partikelaustritts aus dem Presskanal und der Erfassung eines Knoters durch den Blasluftstrom 38 von einer Periode der Kolbenbewegung zur nächsten variiert, so dass diese Wartezeit, gemittelt über eine Vielzahl von Kolbenbewegungen zumindest für die Knoter 20a, 20c gleich ist und keiner von ihnen systematisch schlechter vor Partikelablagerungen geschützt ist als der andere.

### Bezugszeichen

- 1: Ballenpresse
- 2: Aufnahmevorrichtung
- 3: Erntegut
- 4: Aufsammeltrommel
- 5: Rolle
- 6: Rolle
- 7: Schneckenwalze
- 8: Schneidrotor
- 9: Sammelkanal
- 10: Raffer
- 11: Zinken
- 12: Hebel
- 13: Kurbelarm
- 14: Lenker
- 15: Flanke
- 16: Presskanal
- 17: Presskolben
- 18: Ballen
- 19: Bindenadel
- 20: Knoter
- 21: Knoterbaugruppe
- 22: Seitenwand
- 23: Welle
- 24: Welle
- 25: Kegelrad
- 26: Gebläse
- 27: Motor
- 28: Welle
- 29: Gehäuse
- 30: Blasluftkanal
- 31: Strömungsleitelement
- 32: Klappe
- 33: Elektromotor
- 34: Zwischenraum
- 35: Achse
- 36: Stange
- 37: Ebene
- 38: Blasluftstrom
- 39: Exzenter
- 40: Achse
- 41: Rad
- 42: Stift
- 43: Kulisse

## Patentansprüche

1. Quaderballenpresse mit einem Presskanal (16), einem an dem Presskanal (16) angeordneten ersten Knoter (20a), einem Gebläse (26) und einem Strömungsleitelement (31), wobei das Strömungsleitelement (31) zwischen einer ersten Stellung, in der es einen Blasluftstrom (38) des Gebläses (26) auf den ersten Knoter (20a) lenkt, und wenigstens einer zweiten Stellung beweglich ist, in der es den Blasluftstrom an dem ersten Knoter (20a) vorbei lenkt, **dadurch gekennzeichnet, dass** das Strömungsleitelement (31) in der zweiten Stellung den Blasluftstrom (37) auf einen zweiten Knoter (20c) lenkt.

2. Quaderballenpresse nach Anspruch 1, **dadurch gekennzeichnet, dass** sie wenigstens zwei Strömungsleitelemente (31) aufweist und das jedem Knoter (20) genau eines der Strömungsleitelemente (31) zum Lenken des Blasluftstroms (37) auf den Knoter (20) zugeordnet ist.

3. Quaderballenpresse nach Anspruch 1 oder 2, **dadurch gekennzeichnet, dass** das Strömungsleitelement (31) und ein Presskolben (17) des Presskanals (16) periodisch angetrieben sind und dass die Perioden des Strömungsleitelements (31) und des Presskolbens (17) in einem nichtganzzahligen Verhältnis stehen.

4. Quaderballenpresse nach Anspruch 3, **dadurch gekennzeichnet, dass** bei jeweils gleicher Stellung des Presskolbens (17) in verschiedenen Perioden der Kolbenbewegung das Strömungsleitelement (31) abwechselnd die erste und die zweite Stellung einnimmt.

5. Quaderballenpresse Anspruch 3 oder 4, **dadurch gekennzeichnet, dass** in jeder Periode der Presskolbenbewegung das Strömungsleitelement (31) den Weg zwischen erster und zweiter Stellung wenigstens einmal zurücklegt

6. Quaderballenpresse nach einem der vorhergehenden Ansprüche, **dadurch gekennzeichnet, dass** das Strömungsleitelement (31) wenigstens eine schwenkbare Klappe (32), vorzugsweise mehrere gekoppelt in gleicher Richtung schwenkbare Klappen (32) umfasst.

7. Quaderballenpresse nach Anspruch 6, **dadurch gekennzeichnet, dass** die wenigstens eine Klappe (32) am Ausgang eines Luftführungsrohres (30) angeordnet ist.

8. Quaderballenpresse nach Anspruch 6 oder 7, **dadurch gekennzeichnet, dass** die wenigstens eine Klappe (32) von den Knotern (20) durch einen von luftführenden Einbauten freien Zwischenraum (34) getrennt ist.

9. Quaderballenpresse nach einem der Ansprüche 6 bis 8, **dadurch gekennzeichnet, dass** die Klappe (32) eine Ebene (37) definiert, die in der ersten Stellung den ersten Knoter (20a) und in der zweiten Stellung den zweiten Knoter (20c) kreuzt.

10. Quaderballenpresse nach einem der Ansprüche 6 bis 9, **dadurch gekennzeichnet, dass** die Schwenkgeschwindigkeit der Klappe (32) in der ersten und zweiten Stellung niedriger ist als in einer Zwischenstellung.

11. Quaderballenpresse nach Anspruch 10, **gekennzeichnet durch** einen dritten Knoter (20b), der in der Zwischenstellung dem Blasluftstrom (37) ausgesetzt ist

12. Quaderballenpresse nach einem der Ansprüche 6 bis 11, **dadurch gekennzeichnet, dass** die Schwenkbewegung der Klappe (32) über einen Exzenter (39) angetrieben ist.

## Claims

1. A square bale press comprising a pressing passage (16), a first knotter (20a) arranged at the pressing passage (16), a blower (26) and a flow guide element (31), wherein the flow guide element (31) is moveable between a first position in which it directs a blowing air flow (38) of the blower (26) on to the first knotter (20a) and at least one second position in which it directs the blowing air flow past the first knotter (20a), **characterised in that** the flow guide element (31) in the second position directs the blowing air flow (37) on to a second knotter (20c).

2. A square bale press according to claim 1 **characterised in that** it has at least two flow guide elements (31) and associated with each knotter (20) is precisely one of the flow guide elements (31) for directing the blowing air flow (37) on to the knotter (20).

3. A square bale press according to claim 1 or claim 2 **characterised in that** the flow guide element (31) and a pressing piston (17) of the pressing passage (16) are periodically driven and that the periods of the flow guide element (31) and the pressing piston (17) are in a non-integer ratio.

4. A square bale press according to claim 3 **characterised in that** with a respectively identical position of the pressing piston (117) in various periods of the piston movement the flow guide element (31) alternately assumes the first and the second position.

5. A square bale press according to claim 3 or claim 4 **characterised in that** in each period of the pressing piston movement the flow guide element (31) covers the distance between the first and second positions at least once.

6. A square bale press according to one of the preceding claims **characterised in that** the flow guide element (31) includes at least one pivotable flap (32), preferably a plurality of flaps (32) pivotable in coupled relationship in the same direction.

7. A square bale press according to claim 6 **characterised in that** the at least one flap (32) is arranged at the outlet of air guide tube (30).

8. A square bale press according to claim 6 or claim 7 **characterised in that** the at least one flap (32) is separated from the knotters (20) by an intermediate space (34) which is free of air-guiding fitments.

9. A square bale press according to one of claims 6 to 8 **characterised in that** the flap (32) defines a plane (37) which crosses the first knotter (20a) in the first position and the second knotter (20c) in the second position.

10. A square bale press according to one of claims 6 to 9 **characterised in that** the pivotal speed of the flap (32) in the first and second positions is lower than in an intermediate position.

11. A square bale press according to claim 10 **characterised by** a third knotter (20b) which is exposed to the blowing air flow (37) in the intermediate position.

12. A square bale press according to one of claims 6 to 11 **characterised in that** the pivotal movement of the flap (32) is driven by way of an eccentric (39).

## Revendications

1. Presse à balles parallélépipédiques comprenant un canal de pressage (16), un premier noueur (20a) disposé sur le canal de pressage (16), un ventilateur (26) et un élément de guidage d'écoulement (31), l'élément de guidage d'écoulement (31) étant déplaçable entre une première position, dans laquelle il dirige un courant d'air soufflé (38) du ventilateur (26) sur le premier noueur (20a), et au moins une seconde position dans laquelle il dirige le courant d'air soufflé à côté du premier noueur (20a), **caractérisée en ce que**, dans la seconde position, l'élément de guidage d'écoulement (31) dirige le courant d'air soufflé (37) sur un deuxième noueur (20c).

2. Presse à balles parallélépipédiques selon la revendication 1, **caractérisée en ce qu'**elle comporte au moins deux éléments de guidage d'écoulement (31), et **en ce qu'**à chaque noueur (20) est associé exactement un des éléments de guidage d'écoulement (31) pour diriger le courant d'air soufflé (37) sur le noueur (20).

3. Presse à balles parallélépipédiques selon la revendication 1 ou 2, **caractérisée en ce que** l'élément de guidage d'écoulement (31) et un piston de pressage (17) du canal de pressage (16) sont entraînés périodiquement, et **en ce que** les périodes de l'élément de guidage d'écoulement (31) et du piston de pressage (17) sont dans un rapport non entier.

4. Presse à balles parallélépipédiques selon la revendication 3, **caractérisée en ce que**, pour une position du piston de pressage (17) à chaque fois identique dans différentes périodes du déplacement du piston, l'élément de guidage d'écoulement (31) adopte alternativement la première et la seconde position.

5. Presse à balles parallélépipédiques selon la revendication 3 ou 4, **caractérisée en ce que**, dans chaque période du déplacement du piston de pressage, l'élément de guidage d'écoulement (31) parcourt au moins une fois le trajet entre la première et la seconde position.

6. Presse à balles parallélépipédiques selon une des revendications précédentes, **caractérisée en ce que** l'élément de guidage d'écoulement (31) comprend au moins un volet pivotant (32), de préférence plusieurs volets (32) pivotant de manière couplée dans la même direction.

7. Presse à balles parallélépipédiques selon la revendication 6, **caractérisée en ce que** le au moins un volet (32) est disposé à la sortie du tube de guidage d'air (30).

8. Presse à balles parallélépipédiques selon la revendication 6 ou 7, **caractérisée en ce que** le au moins un volet (32) est séparé des noueurs (20) par un intervalle (34) dépourvu de moyens rapportés de guidage d'air.

9. Presse à balles parallélépipédiques selon une des revendications 6 à 8, **caractérisée en ce que** le volet (32) définit un plan (37) qui, dans la première position, croise le premier noueur (20a) et, dans la seconde position, croise le deuxième noueur (20c).

10. Presse à balles parallélépipédiques selon une des revendications 6 à 9, **caractérisée en ce que** la vitesse de pivotement du volet (32) dans la première et la seconde position plus basse que dans une position intermédiaire.

11. Presse à balles parallélépipédiques selon la revendication 10, **caractérisée par** un troisième noueur (20b) qui, dans la position intermédiaire, est exposé au courant d'air soufflé (37).

12. Presse à balles parallélépipédiques selon une des revendications 6 à 11, **caractérisée en ce que** le mouvement pivotant du volet (32) est entraîné par un excentrique (39).
